Europäisches Patentamt

European Patent Office

Office européen des brevets

(19)

(11) Publication number: **0 282 652**
**A1**

(12) **EUROPEAN PATENT APPLICATION**

(21) Application number: **87200481.7**

(22) Date of filing: **16.03.87**

(51) Int. Cl.⁴: **H04N 1/10 , G06F 15/40**

(43) Date of publication of application:
**21.09.88 Bulletin 88/38**

(84) Designated Contracting States:
**AT BE CH DE FR GB IT LI NL**

(71) Applicant: **Westin, Gunvor**
**Strindbergsgatan 50**
**S-115 31 Stockholm(SE)**

Applicant: **NYBOM, Rolf**
**Börjessonsväg 42**
**S-161 55 Bromma(SE)**

(72) Inventor: **Westin, Gunvor**
**Strindbergsgatan 50**
**S-115 31 Stockholm(SE)**
Inventor: **NYBOM, Rolf**
**Börjessonsväg 42**
**S-161 55 Bromma(SE)**

(74) Representative: **Bäckström, Leif C. et al**
**Protector Leif C. Bäckström AB P.O. Box**
**5132**
**S-162 05 Vällingby(SE)**

(54) **A method of documenting two- or three-dimensional objects.**

(57) The disclosure relates to a method for the reliable documentation of two or three-dimensional objects (2) for the purposes of duly establishing, after documentation of the object (2) whether or not a replication or imitation tallies with the object.

The object which is to be documented is placed in an apparatus (1) with given coordinates along the x, y and, where applicable, z axes with a given zero position whence these axes extend mutually offset at 90°.

Image reproduction of the object (2) is effected by means of at least two reproductions taken by the intermediary of an image reproduction apparatus (10) whose position in relation to the above-mentioned zero position is registered. As images, there are selected, first, an overall view of the object (2) the corresponding position of the overall view in the image reproduction apparatus (10) being registered, and secondly a macroview, i.e. a view of such powerful magnification that individual details in the form of, for instance, droplets, brush hairs down to particle level etc., may clearly be observed and measured, the corresponding position of this macroview in the image reproduction apparatus (10) being registered. These images, all relevant data in the form of, for example, creator of the object (2), owner of the object, the above-disclosed positions, the parameters of the image reproduction apparatus (10) etc. are registered. At least such data as is of importance for the retrieval of the macroview and the macroimage per ce are separated and are protected against unauthorized retrieval.

Fig 2

# A METHOD OF DOCUMENTING TWO-OR THREE-DIMENSIONAL OBJECTS

## TECHNICAL FIELD

The present invention relates to a method for reliably documenting two-or three-dimensional objects for the purposes of duly establishing, after such documentation of the object, whether or not a replication or limitation thereof tallies with the object.

## BACKGROUND ART

The documentation of valuable objects, such as works of art, antiques etc., is not widely practiced and, as a rule, is exclusively effected in conjunction with the underwriting of insurance for the object in question.

Furthermore, the documentation of objects which allows their later simple identification is even more sparingly employed in this art.

## OBJECT OF THE PRESENT INVENTION

The object of the present invention is to realize a method for documenting an object such that a systematic gathering is effected of all data relevant to the object and registration of such data is effected such that any subsequent scrutiny of replication or limitation of the object in question may simply and rapidly be put into effect. For such documentation to be meaningful from the protective aspect, the present invention relates to a unitary methodology for the collection and registration of all relevant data and to the effective withholding of a certain part of such data from unauthorized persons.

The method as set forth in the preamble to the body of this specification solves the above-outlined objects and purposes according to the present invention, in that the object to be subjected to documentation is placed in an apparatus with given coordinates in x, y and, where necessary, z axes with a given zero position whence said axes extend mutually offset through 90°; that an image of the object is taken by means of at least two images using image reproduction means whose petition in relation to the above-mentioned zero position is registered; that such at least twofold image-taking consists, firstly, of an overall view of the subject, the corresponding position of the overall view in the image reproduction apparatus being registered, and secondly, a macro-view - i.e. a view which is so greatly magnified that individual details in the form of, for example, droplets, brush hairs down to particulate level, etc. may clearly be observed and measured, the position of the image-taking apparatus corresponding to the position of the macroview being registered; that these image reproductions, all relevant data in the form of, for example, the creator of the object, the owner of the object, the above-mentioned positions, registration values of the image-taking apparatus etc. are all registered; and that at least such data as is of importance to the retrieval and reproduction of the macro-view and macro-image per se are separated and protected against unauthorized retrieval.

Particular advantages will be afforded by the method according to the present invention if the previously-mentioned macro-view is selected at random and if data which derive from the previously-mentioned positions are stored discrete from data which are related to at least the above-mentioned macro-view.

## BRIEF DESCRIPTION OF THE ACCOMPANYING DRAWINGS

The nature of the present invention and its aspects will be more readily understood from the following brief description of the accompanying drawings, and discussion relating thereto.

In the accompanying drawings:

Fig. 1 illustrates an apparatus in which the object which is to be documented is placed;

Fig. 2 illustrates one type of image-taking apparatus and its orientation in relation to the apparatus illustrated in Fig. 1 for positioning the object which is to be documented; and

Fig. 3 is a panoramic view of suitable hardware for documenting and registering data.

## DESCRIPTION OF PREFERRED EMBODIMENT

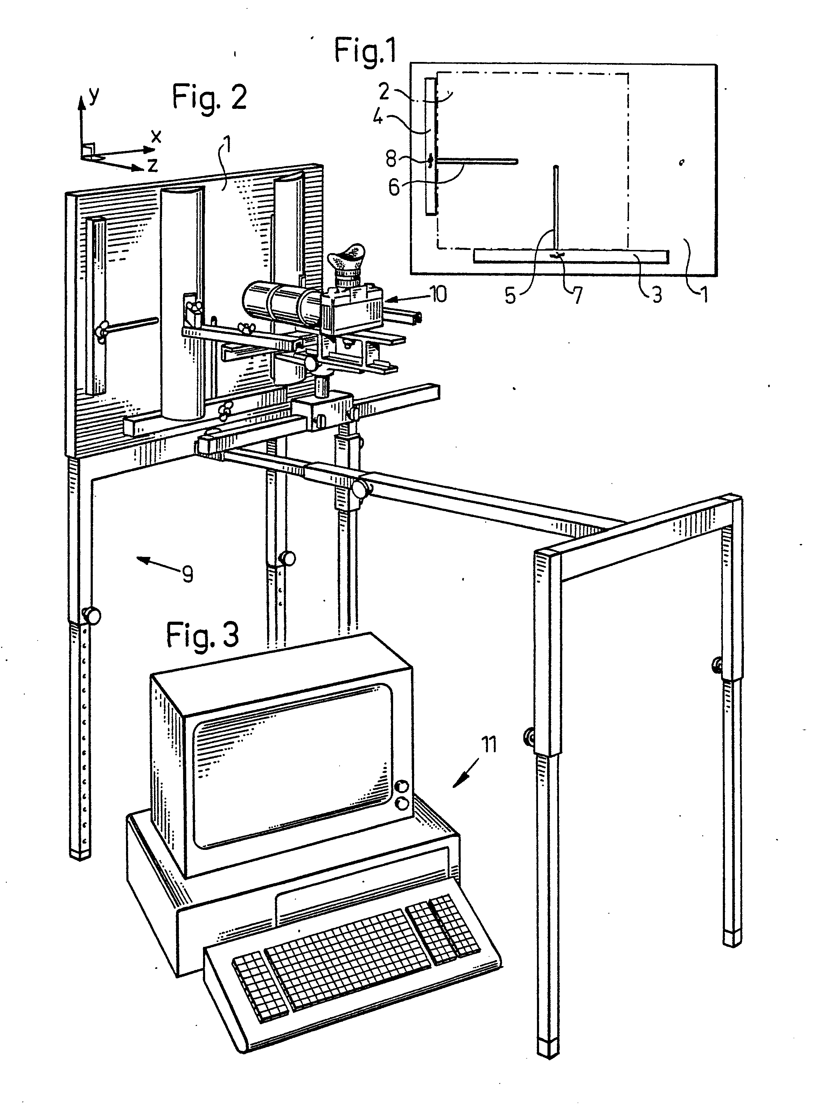

Referring to the drawings, the apparatus 1 illustrated in Fig. 1 for positioning an object to, for example, a work of art which is to be documented, essentially comprises a vertically displaceable and fixable first rule 3 and a horizontally displaceable and fixable second rule 4. These rules 3 and 4 are, for example, displaceable in grooves 5 and 6, respectively, in that butterfly nuts 7 and 8 are loosened and subsequently tightened in desired positions the first rule 3 supporting the object 2 in the vertical direction and the second rule 4 supporting the object 2 in the lateral direction.

In the employment of the method according to the present invention on, for example, rectangular and square 2-dimensional objects 2 such as paintings, the point of intersection between the rules 3 and 4 is advantageously employed as the zero point, one corner of the object 2 being placed in this point of intersection. If the object or work of art 2 is framed, the dimensions of the frame are advantageously mathematically deducted, with the result that the zero point will be located on the intersecting lines spaced from the rules 3 and 4 by the dimensions of the frame.

In the documentation of 3-dimensional objects, the plane of the apparatus 1 is appropriately employed as zero point along the z axis, i.e. towards the vanishing point of the object 2.

So as not to overburden the skilled reader of this specification, the discussion of the present invention below will relate exclusively to plane, 2-dimensional objects such as paintings, but it will nontheless be apparent to such skilled readers that any two of two-and three-dimensional object may be documented employing the method according to the present invention.

The apparatus 1 for positioning the work of art - or object 2 - is fixedly retained in relation to a vertically adjustable frame 9. An image reproduction device 10 adjustable in all directions in relation to the frame 9 is localized in register with the apparatus 1. The image reproduction 10 may consists of a camera for reproduction on photographic paper, a video camera for magnetic image reproduction of the object, or any other appropriate means for capturing and storing images of the object. However, the present invention will be considered essentially hereinbelow solely with reference to a photographic camera.

The camera 10 may be positioned vertically and horizontally in relation to the apparatus 1 and also spaced from the apparatus 1, i.e. along the x, y and z axes in relation to the object 2, as shown in Fig. 2, by means of a combination of releasing and locking butterfly nuts and runners. Naturally, various types of positioning means may be employed, for example manually rotary or motor-driven screws. Advantageously, all positioning means are designed with easily calibrated scales or with indicators which generate signals corresponding to the currently engaged positions. These position signals and other signals corresponding, for example, to a selected lens for the camera 10, artist, owner of object 2, dimensions of object 2, selected reproductions etc. are, moreover, entered into an information register 11 which, in this case may, by way of exemplification, consist of a computer with its associated visual display unit, printer and memory.

If deemed suitable, the images generated by the image reproduction device 10 may also, by means of electronic image processing, be entered and stored in the memory circuits of the computer 11.

When an image of the object is to be taken, a first view of the entire object is made, the dimensions thereof being exactly determined in that all data relevant hereto are registered, for example the focal point of the camera 10, the spacing of the camera 10 along the x, y and possibly also the z axis in relation to the apparatus 1. Moreover, a second view is selected using a camera lens offering a high degree of magnification, for example a so-called macropicture of such magnification that individual details in the form of, for instance, the structure of the fabric of the object 2, individual brush strokes from applied brushes, microscopic droplets etc. clearly appear and may readily be recognized and measured. This second view may be selected at random anywhere on the object 2. It is particularly advantageous according to the present invention is the second view is selected so as to provide a considerable amount of informative content, i.e. such that a part of the object which is rich in detail is reproduced in the macro-view.

A certain part of the information which is captured and registered using the method according to the present invention is then stored in a manner which is readily accessible, for example such information as is of general interest. In this context, mention might be made of the name of artist, owner, the first view taken according to the above procedure etc. On the other hand, other parts of the above-disclosed information are rendered unavailable to unauthorized persons. Particular mention might, here, be made of such information as relates to the exact size of the object 2, the chosen zero point of the object 2, exact positional indications for the selected macro-view, the macro-image per se etc. It is particularly advantageous according to the present invention if the macro-image if stored wholly discrete from the information concerning the positions for selected macro-view or - in the event of computer storage concerning a file of authorized access codes related to individuals and necessary in order simultaneously to provide access to both the macro-image and the positions therefore, as well as the camera lens utilized, respectively.

The present invention should be not considered is that described above and shown on the drawings, many modifications being conceivable without departing from the spirit and scope of the appended claims.

## Claims

1. A method for reliably documenting 2-or 3-dimensional objects (2) in order duly to be able to establish, after such documentation of said object (2) whether or not a replication or imitation thereof tallies with the object, **characterized in that** the object (2) is placed in an apparatus (1) with given coordinates along the x, y and, where applicable, z axes with a given zero position whence said axes extend mutually offset through 90°; **that** reproduction of the object (2) is effected by means of at least two image productions by the intermediary of an image reproduction apparatus (10) whose position in relation to said zero position is registered; **that** as image reproductions, there are selected first an overall view of said object (2) the corresponding position of said overall view in said image reproduction apparatus (10) be registered, and secondly a macro-view, i.e. a view of such powerful magnification that individual details in the form of, for instance, droplets, brush hairs at particle level etc. may clearly be observed and measured, corresponding position of said macro-view in said image reproduction apparatus (10) being registered; **that** said reproductions, all relevant data in the form of, for example, creator of said object (2), owner of said object, said positions, the parameters of said image reproduction apparatus (10) etc. are registered; and **that** at least such data as is of importance for the retrieval of said macro-view and said macro-reproduction per se are separated and protected from unauthorized retrieval.

2. The method as claimed in Claim 1, **characterized in that** use is made, as image reproduction apparatus (10) of equipment providing reproductions in the form of photographic pictures or electronically stored picture.

3. The method as claimed in Claim 1 or 2, **characterized in that** said macro-view is selected at random.

4. The method as claimed in Claim 1 or 2, **characterized in that** said macro-view is selected in relation to the informative content at different points on said object (2).

5. The method as claimed in Claim 1 or 2, **characterized in that** that microview is optionally selected at random or in relation to the informative content of said object at different points.

6. The method as claimed in anyone of the preceding claims, **characterized in that** said indicated zero position is selected in response to the form or appearance of said object and is registered.

7. The method as claimed in anyone of the preceding claims, **characterized in that** data deriving from said positions is separated and stored discretely from data relating to at least said macro-view.

Fig.1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 124 098 (WANG LABORATORIES INC.)<br>* page 6, line 26 - page 9, line 11; figure 3 * | 1 | H 04 N 1/10<br>G 06 F 15/40 |
| | --- | | |
| A | "Europäische Veduten des Bernardo Bellotto genannt Canaletto", 1966, pages 70, 71; plates 28, 29, Villa Hügel e.V, Essen-Bredeney;<br>* page 70, last paragraph - page 71, paragraph 1; plates 28, 29 * | 1 | |
| | ----- | | |

TECHNICAL FIELDS
SEARCHED (Int. Cl.4)

H 04 N 1/00
G 06 F 15/00

The present search report has been drawn up for all claims

| Place of search | Date of completion of the search | Examiner |
|---|---|---|
| BERLIN | 01-10-1987 | DUDLEY C. |

EPO Form 1503 03 82